# EUROPEAN PATENT APPLICATION

(11) **EP 2 571 284 A1**
(43) Date of publication of application: **20.03.2013**
(21) Application number: 11306151.9
(22) Date of filing: 15.09.2011
(51) Int. Cl.: H04Q 1/08, G06F 13/40, G06F 1/18

(54) **Telecommunication sandwich card arrangement with common optical module at the front side**

(71) Applicant: Alcatel Lucent, 75007 Paris (FR)
(72) Inventor: Seitz, Reinhold, 91161 Hilpoltstein (DE)
(74) Representative: ALU Antw Patent Attorneys

(57) **Abstract**

A telecommunication sandwich card arrangement provided with backplane connectors (BPC), a front or face plate (FP) and a several parallel printed circuit boards (PCB1-PCBn) connected to the backplane along first edges, e.g. rear side edges, of these boards. The sandwich card arrangement also comprises a common module (COM), preferably a common optical interface module, located between the face plate and the parallel boards. The common module is coupled to the boards along the front side edges via an interface interconnection board (ICB) thereof, the front side edges being opposite and parallel to the rear side edges. The printed circuit boards preferably have a U-shape for surrounding the common optical module and the interface interconnection board towards the boards, and for allowing access to the backplane as well as a strong fixation of the boards to the face plate.

## Description

The present invention relates to a telecommunication sandwich card arrangement with backplane connectors, a face plate and a plurality of parallel printed circuit boards connected to said backplane connectors along first edges of said printed circuit boards.

Such a known telecommunication sandwich card arrangement and its associated transmission capacity is generally subjected to design constraints based on a given slot pitch of each individual printed circuit board or card.

A solution to overcome these constraints is to combine a couple of slots, or backplane connectors, with a sandwich card arrangement combining adjacent slots to a common functional unit.

This solution is particularly, but not exclusively, applicable to an optical interface, e.g. "400G PIC" that is a photonic integrated circuit (PIC) combining the functionality of four 100G PICs and thereby delivering 400 Gigabits/second (Gb/s) of optical capacity in a single module.

In addition to the above functional constraints due to limited board space on an individual printed circuit board, other constraints are based on
- thermal constraints due to limited options for cooling via forced airflow inside a single slot;
- technological constraints based on available packaging factor of essential components, e.g. 100G PIC on a single card;
- cost constraints of providing individual printed circuit boards with individual front side interfaces, i.e. towards the face plate, versus a sandwich card arrangement with a commonly used optical module placed at the front side, e.g. 400G PIC, which combines actually 4 times 100G; and
- signal path constraints due to high-speed signals that need short transmission paths.

There are currently various sandwich card arrangements available. However, never in a manner that serves to overcome all of the above described constraints.

Existing sandwich cards mostly make use of so called "Mezzanine connectors" which interconnect two or more parallel printed circuit boards or cards in a stacking configuration.

Hence the signal paths are fairly long especially in cases where all individual printed circuit boards of the sandwich card arrangement need to communicate with each other. Furthermore optical modules, such as CFP, 100G PIC, need to be placed on individual printed circuit boards with all associated topics related to layout, backplane access, components and thermal management. More detailed information about CFP Multi-Source Agreement (MSA) can for instance be found at the Internet site < httg://www.cfp-msa.org/ >.

An object of the present invention is to provide a telecommunication sandwich card arrangement of the above known type but wherein the above mentioned functional, thermal, technological, cost and signal path constraints are eliminated.

According to a characterizing embodiment of the invention, this object is achieved due to the fact that said sandwich card arrangement further comprises a common module located between said face plate and said plurality of parallel printed circuit boards, that said common module is coupled to said printed circuit boards along second edges of said printed circuit boards and that for each printed circuit board of said plurality said second edge is opposite and parallel to said first edge.

In this way, the common module allows to obtain a flexible sandwich card arrangement of which the density is improved with respect to that of known arrangements. The sandwich card arrangement with the common module allows to get shortest access from the common module to each individual printed circuit board and to overcome technical constraints, e.g. with respect to packaging density, by defining a group of slots or printed circuit boards that can be commonly used with one common module, which can be seen as performing the function of a common sandwich card arrangement. For instance, the common module allows to split-up signals to other components, on the printed circuit boards, without necessarily going fully to the backplane and back.

Another characterizing embodiment of the present invention is that said sandwich card arrangement further comprises an interface interconnection board adapted to interconnect said common module and said plurality of parallel printed circuit boards.

In a preferred characterizing embodiment of the present invention, said interface interconnection board is connected to said common module through mezzanine connectors.

The invention therewith follows common standards for equipment practice and printed circuit board arrangements.

Also another characterizing embodiment of the present invention is that said interface interconnection board is located parallel to said backplane.

The interface interconnection board operates thus as an intermediate backplane with related connectors to the common module and to the printed circuit boards. The given backplane connectors for each involved card slot can be fully utilized.

In another preferred characterizing embodiment of the present invention, said printed circuit boards have an U-shape surrounding said common module, said first edge corresponding to the bottom of the U-shape, and said printed circuit boards are fixed at said face plate at the tops of the U-shape.

This U-shape design allows accessing the backplane (first edges which are preferably rear side edges) as well as to mechanically attach the sandwich card arrangement to the front or face plate.

Still another characterizing embodiment of the present invention is that said common module is provided with heat fins extending outside a front side of said face plate.

This improves the cooling of the common module via the heat fins or heat sinks that protrude through the face plate, e.g. via an EMC sealed cut-out.

Further characterizing embodiments of the present telecommunication sandwich card arrangement are mentioned in the appended claims.

It is to be noticed that the terms "comprising" or "including", used in the claims, should not be interpreted as being restricted to the means listed thereafter. Thus, the scope of an expression such as "a device comprising means A and B" should not be limited to an embodiment of a device consisting only of the means A and B. It means that, with respect to embodiments of the present invention, A and B are essential means of the device.

Similarly, it is to be noticed that the term "coupled", also used in the claims, should not be interpreted as being restricted to direct connections only. Thus, the scope of the expression such as "a device A coupled to a device B" should not be limited to embodiments of a device wherein an output of device A is directly connected to an input of device B. It means that there may exist a path between an output of A and an input of B, which path may include other devices or means.

The above and other objects and features of the invention will become more apparent and the invention itself will be best understood by referring to the following description of an embodiment taken in conjunction with the accompanying drawings wherein:
**Fig. 1** is a top view of the telecommunication sandwich card arrangement according to the invention;
**Fig. 2** is a side view of the sandwich card arrangement of Fig. 1; and
**Fig. 3** is a front view of the sandwich card arrangement of Fig. 1.

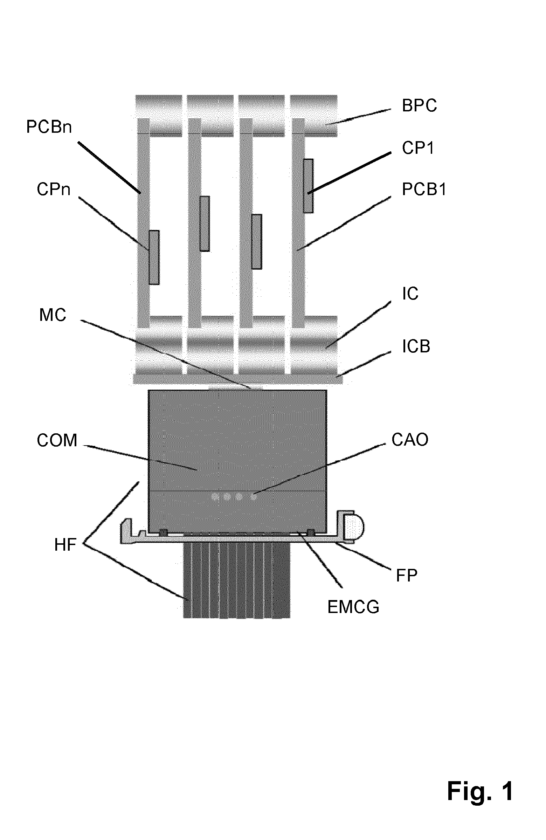

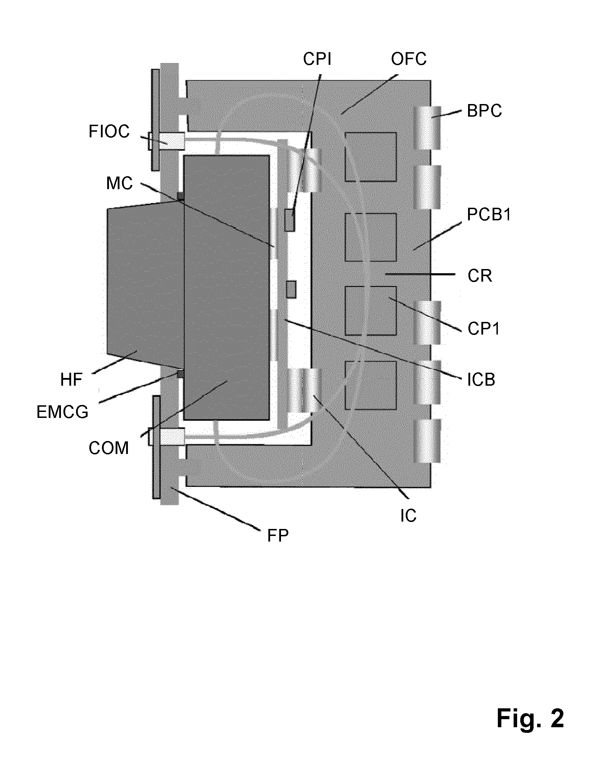

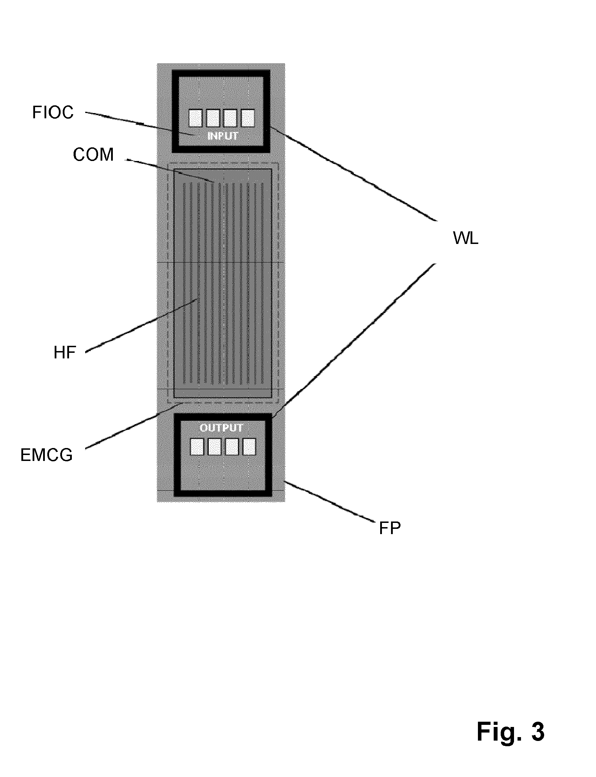

The sandwich card arrangement of which the top, side and front is respectively shown at the Figs. 1, 2 and 3 is preferably, but not exclusively, an optical sandwich card design used in telecommunication equipment. The sandwich card arrangement comprises a common optical module COM, e.g. of the type 400G PIC that is a photonic integrated circuit (PIC) delivering 400 Gigabits/second (Gb/s) of optical capacity in a single module using complex modulation formats, that interfaces several printed circuit boards or cards PCB1-PCBn and a front or face plate FP. The common optical module COM is fixed to the face plate FP with latches via an EMC gasket EMCG.

Each printed circuit board PCB1/PCBn houses components CP1/CPn such as Application-Specific Integrated Circuits ASICs and has a first edge, preferably a rear side edge, with connectors engaged in the backplane connectors BPC of the associated sandwich card slots of the subrack.

The common optical module COM is coupled to the printed circuit boards PCB1-PCBn through an interface interconnection printed circuit board ICB of which one side faces second edges, e.g. front side edges, of the printed circuit boards. This front side edge is opposite and parallel to the rear side edge, and the distance between the rear side and the front side edge is equal for all the printed circuit boards PCB1-PCBn.

The interface interconnection board ICB interconnects the individual printed circuit boards and is parallel to the backplane, which avoids the use of Mezzanine connectors between the individual printed circuit boards. As a result, optical fiber cable OFC routing is possible in the free space between the printed circuit boards from the common optical module COM, e.g. a front side interface module 4 x 100G or 1 x 400G PIC, to the face plate FP, e.g. a front side interface 4 x 100G via LC coupler. In more detail, the optical fiber cables OFC have first ends connected to cable outlets CAO of the common optical module COM and second ends connected to front side I/O connectors FIOC located on the face plate FP.

The interface interconnection board ICB is connected to the common optical module COM through Mezzanine connectors MC, e.g. Mezzanine connectors, and to the front side edges of the printed circuit boards PCB1-PCBn through interface connectors IC. The interface interconnection board ICB may also house components CPI such as ASICs.

Each printed circuit board PCB1/PCBn has an U-shape to accommodate the interface interconnection board ICB and surrounding the common optical module COM. The printed circuit boards PCB1-PCBn preferably also surround the interface interconnection board ICB. The rear side edge of the printed circuit board corresponds to the bottom of the U-shape, whilst the upper and lower end of the U-shape allows the printed circuit board to be attached to the face plate FP.

A wide latch WL covers the whole width of the multi-slot sandwich card face plate FP with an open structure to accommodate the front side I/O connectors FIOC.

The common optical module COM is finally provided with heat fins HF extending outside the front side of the face plate FP via an EMC sealed cut-out.

Owing to the presence of the combined or common optical module COM, the optical sandwich card arrangement supports the following:
- basic and slot specific function, such as power supply, backplane interfaces, ASICs and Field-Programmable Gate Array FPGAs, on each individual printed circuit board PCB1/PCBn as usually done per slot;
- interconnection of the individual printed circuit boards PCB1-PCBn with an interface interconnection board ICB, parallel to the backplane, which avoids the use of Mezzanine connectors between the individual printed circuit boards;
- direct access for signals, control and power from all the printed circuit boards PCB1-PCBn towards the interface interconnection board ICB and the common optical module COM;
- access from the common optical module COM via the interface interconnection board ICB to the individual printed circuit boards and hence to the backplane;
- functional split-up from common optical module COM to the backplane via the individual printed circuit boards;
- thermal management of hole function, including the common optical module COM, across the combined slot or printed circuit boards PCB1-PCBn arrangement;
- fairly short paths for high speed signals from all individual printed circuit boards combined in the sandwich card arrangement;
- option to support a common optical module COM from all printed circuit boards combined in the rank arrangement without changing the backplane architecture and connectivity;
- option to use front side cooling, e.g. via the heat sinks or heat fins HF, for the common optical module COM instead of relying on forced convection cooling across the individual boards PCB1-PCBn;
- cooling optimization for the common optical module COM via directly attached heat fins HF that protrude through the printed circuit board face plate FP via the EMC sealed cut-out;
- easy optical fiber routing CR due to vertical orientation of common optical module COM;
- optical fiber cables OFC are routed away from the hot front side interface and not interfering with it;
- option to apply standard high speed connectors at the rear side edge as well as the front side edge of the individual printed circuit boards PCB1-PCBn;
- option to apply standard high speed Mezzanine connectors for attaching the common optical module COM to the interface interconnection printed circuit board ICB; and
- option to use the interface interconnection board ICB for multiple interconnection purposes, e.g. high-speed signals, control, power, etc., that are not on the backplane itself and which need to be as short as possible in some cases.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A telecommunication sandwich card arrangement with backplane connectors (BPC), a face plate (FP) and a plurality of parallel printed circuit boards (PCB1 - PCBn) connected to the backplane via said backplane connectors along first edges of said printed circuit boards,
***characterized in that*** said sandwich card arrangement further comprises a common module (COM) located between said face plate (FP) and said plurality of parallel printed circuit boards (PCB1 - PCBn),
***in that*** said common module is coupled to said printed circuit boards along second edges of said printed circuit boards,
***and in that,*** for each printed circuit board of said plurality, said second edge is opposite and parallel to said first edge.

2. The sandwich card arrangement according to claim **1**, **characterized in that** said sandwich card arrangement further comprises an interface interconnection board (ICB) adapted to interconnect said common module (COM) and said plurality of parallel printed circuit boards (PCB1 - PCBn).

3. The sandwich card arrangement according to claim **2**, **characterized in that** said interface interconnection board (ICB) is connected to said common module (COM) through mezzanine connectors (MC).

4. The sandwich card arrangement according to claim **2**, **characterized in that** said interface interconnection board (ICB) is located parallel to said backplane.

5. The sandwich card arrangement according to claim **2**, **characterized in that** said interface interconnection board (ICB) is provided with interface connectors (IC) connected to the printed circuit boards of said sandwich card arrangement along said second edges thereof.

6. The sandwich card arrangement according to claim **1**, **characterized in that** each of said printed circuit boards (PCB1/PCBn) has an U-shape surrounding said common module (COM).

7. The sandwich card arrangement according to claim **6**, **characterized in that** said printed circuit boards (PCB1 - PCBn) are fixed at said face plate (FP) at the upper and lower end of the U-shape.

8. The sandwich card arrangement according to claim **1**, **characterized in that** the U-shape of said printed circuit board (PCB1/PCBn) surrounds said interface interconnection board (ICB).

9. The sandwich card arrangement according to claim **1**, **characterized in that** said common module (COM) is a common optical module.

10. The sandwich card arrangement according to claim **9**, **characterized in that** said common module (COM) is provided with cable outlets (CAO) to which first ends of optical fiber cables (OFC) are connected, the second ends of said optical fiber cables being connected to front side I/O connectors (FIOC) located on said face plate (FP).

11. The sandwich card arrangement according to claim **9**, **characterized in that** said common optical module (COM) is fixed to said face plate (FP) via an EMC gasket (EMCG).

12. The sandwich card arrangement according to claim **9**, **characterized in that** said common optical module (COM) is provided with heat fins (HF) extending outside a front side of said face plate (FP).

13. The sandwich card arrangement according to claim **1, characterized in that** the distance between said first edge and said second edge is equal for all the printed circuit boards (PCB1 - PCBn) of said plurality.

14. The sandwich card arrangement according to claim **1**, **characterized in that,** for each printed circuit board of said plurality, said first edge is a rear side edge and said second edge is a front side edge opposite and parallel to said rear side edge.
